# EUROPÄISCHE PATENTSCHRIFT

(11) **EP 3 440 977 B1**
(45) Veröffentlichungstag und Bekanntmachung des Hinweises auf die Patenterteilung: **28.09.2022**
(21) Anmeldenummer: 18186966.0
(22) Anmeldetag: 02.08.2018
(51) Int. Cl.: A47L 9/28

(54) **BODENREINIGUNGSROBOTER MIT ENERGIESPEICHERMANAGEMENTSYSTEM**
MOBILE ROBOT CLEANING DEVICE WITH ENERGY STORAGE MANAGEMENT SYSTEM.
ROBOT DE NETTOYAGE AVEC SYSTÈME DE GESTION DES ACCUMULATEURS D'ENERGIE.

(30) Priorität: 10.08.2017 DE 102017118227
(43) Veröffentlichungstag der Anmeldung: 13.02.2019
(73) Patentinhaber: Vorwerk & Co. Interholding GmbH, 42275 Wuppertal (DE)
(72) Erfinder: Erkek, David, 5000 Aarau (CH); Hackert, Georg, 44869 Bochum (DE); Isenberg, Gerhard, 50668 Köln (DE); Ortmann, Roman, 47057 Duisburg (DE); Schmidt, Andreas, 40822 Mettmann (DE)
(74) Vertreter: Müller, Enno

(56) Entgegenhaltungen:
- WO-A1-2009/027400
- GB-A- 2 538 779
- US-A1- 2005 150 519
- US-A1- 2017 072 564

## Beschreibung

### Gebiet der Technik

Die Erfindung betrifft ein Bodenbearbeitungsgerät mit mindestens einem elektrischen Verbraucher, einem Akkumulator zur Energieversorgung des elektrischen Verbrauchers und einer Steuereinrichtung zur Steuerung des Bodenbearbeitungsgerätes.

Des Weiteren betrifft die Erfindung ein Verfahren zum Betrieb eines Bodenbearbeitungsgerätes mit mindestens einem elektrischen Verbraucher, einem Akkumulator zur Energieversorgung des elektrischen Verbrauchers und einer Steuereinrichtung zur Steuerung des Bodenbearbeitungsgerätes.

### Stand der Technik

Bodenbearbeitungsgeräte der vorgenannten Art sind im Stand der Technik in einer Vielzahl von unterschiedlichen Ausführungsvarianten bekannt. Es kann sich beispielsweise um Reinigungsgeräte, Poliergeräte, Rasenmähgeräte oder andere handeln. Das Bodenbearbeitungsgerät kann insbesondere ein sich selbsttätig fortbewegendes Bodenbearbeitungsgerät in der Form eines mobilen Roboters sein, wie beispielsweise aus der WO-A-2009/027,400 bekannt ist.

Der Akkumulator des Bodenbearbeitungsgerätes wird verwendet, um elektrische Verbraucher mit Energie zu versorgen. Je nach der Menge der während des Arbeitsbetriebs benötigten Energie kann es vorkommen, dass ein Energiebedarf größer ist als eine in dem Akkumulator gespeicherte Energiemenge, so dass der Akkumulator nachgeladen werden muss, um den Arbeitsbetrieb fortsetzen oder vollständig ausführen zu können.

Die Druckschrift JP 2006-020830 A offenbart beispielsweise einen sich selbsttätig fortbewegenden Reinigungsroboter, bei welchem eine für einen Reinigungszyklus benötigte Reinigungszeit berechnet wird, wobei aus der benötigten Reinigungszeit eine erforderliche Akkumulatorkapazität errechnet und mit einer zur Verfügung stehenden Ladekapazität verglichen wird, wobei, falls die aktuelle Ladekapazität nicht ausreicht, eine Nachladung des Akkumulators für die benötigte Restreinigungszeit veranlasst wird.

Nachteilig dabei ist, dass die Betriebstätigkeit beendet werden muss, um den Akkumulator des Reinigungsgerätes zunächst soweit nachzuladen, dass eine noch fällige Restreinigung vollständig abgeschlossen werden kann. Das Nachladen des Akkumulators kostet einerseits Zeit, andererseits wird durch häufiges Nachladen die Lebensdauer des Akkumulators nachteilig beeinflusst.

Desweiteren ist es aus der WO 2009/027400 A1 bekannt, eine Verlängerung einer Betriebslaufzeit eines Flächenbearbeitungsgerätes dadurch zu erreichen, dass die Betriebsweise angepasst wird, nämlich der Energieverbrauch eines Verbrauchers reduziert wird. Ebenso ist offenbart, dass eine Restladung des Energiespeichers definiert sein kann, die zurückgehalten wird, um eine Rückkehr der Vorrichtung in eine Grundposition zu ermöglichen.

### Zusammenfassung der Erfindung

Ausgehend von dem vorgenannten Stand der Technik ist es Aufgabe der Erfindung, ein Bodenbearbeitungsgerät so weiterzubilden, dass eine Betriebstätigkeit auch bei Feststellen einer nicht ausreichenden Energiemenge des Akkumulators fortgesetzt werden kann, so dass erst nach vollständiger Ausführung der Betriebstätigkeit ein Nachladen des Akkumulators erfolgen muss.

Zur Lösung dieser Aufgabe wird vorgeschlagen, dass die Steuereinrichtung eingerichtet ist, einen voraussichtlichen Energiebedarf eines oder mehrerer Verbraucher zur Durchführung und vollständigen Beendigung einer vordefinierten Betriebstätigkeit zu ermitteln, den voraussichtlichen Energiebedarf mit einer in dem Akkumulator gespeicherten Energiemenge zu vergleichen und in dem Fall, dass die gespeicherte Energiemenge geringer ist als der Energiebedarf, den Energiebedarf durch eine Anpassung eines oder mehrerer Betriebspararameter der Betriebstätigkeit zu reduzieren, um die Betriebstätigkeit erfolgreich auszuführen.

Erfindungsgemäß wird somit eine für eine bestimmte vollständige Betriebsaufgabe des Bodenbearbeitungsgerätes benötigte Akkuladung berechnet, und dann, sofern eine aktuell nicht ausreichende Akkuladung festgestellt wird, ein Betriebsparameter der Betriebstätigkeit, inklusive Geräteparamater des Bodenbearbeitungsgerätes, angepasst, um mit der aktuell zur Verfügung stehenden Akkuladung die geplante Betriebstätigkeit vollständig und erfolgreich beenden zu können. Dadurch entfällt die Notwendigkeit einer sofortigen zumindest teilweisen Nachladung des Akkumulators, was die Fertigstellung der Betriebstätigkeit einerseits verzögern würde und andererseits auch die Lebensdauer des Akkumulators in negativer Art und Weise beeinflussen könnte. Die tatsächlich innerhalb des Akkumulators zur Verfügung stehende Energiemenge, welche von dem Zustand des Akkumulators und dessen aktueller Ladekapazität abhängt, lässt eine Aussage darüber zu, ob die geplante Betriebstätigkeit vollständig oder mit veränderten Betriebsparametern ausgeführt werden kann. Sollte eine zur Verfügung stehende Energiemenge des Akkumulators auch mit variierten Betriebsparametern nicht ausreichen, um die Betriebstätigkeit erfolgreich auszuführen, ist selbstverständlich auch ein Abbruch der Betriebstätigkeit möglich, um den Akkumulator zunächst während einer Ruhephase aufzuladen.

Es wird vorgeschlagen, dass die Anpassung des Betriebsparameters eine Anpassung eines Betriebsparameters eines elektrischen Verbrauchers und/oder eines für eine Bodenbearbeitungstätigkeit verwendeten Bearbeitungsmittels und/oder eine Anpassung eines Bearbeitungsmodus des Bodenbearbeitungsgerätes beinhaltet. Die Betriebstätigkeit kann somit auf unterschiedliche Art und Weise so variiert werden, dass eine geringere Menge Energie zur Ausführung der Bodenbearbeitungstätigkeit benötigt wird. Beispielsweise kann ein elektrischer Verbraucher, zum Beispiel ein Antriebsmotor, in einen Eco-Modus geschaltet werden, welcher eine geringere Energiemenge benötigt als ein üblicherweise verwendeter Standardmodus. Des Weiteren kann eine Betriebstätigkeit, wie beispielsweise ein Reinigungsbetrieb, des Bodenbearbeitungsgerätes auch dadurch variiert werden, dass von einem Nassreinigungsmodus in einen Trockenreinigungsmodus geschaltet wird, so dass beispielsweise keine Pumpe zum Fördern von Flüssigkeit auf eine zu reinigende Fläche benötigt wird.

Insbesondere kann der variierte Betriebsparameter ausgewählt sein aus der Gruppe: Betrieb bzw. Nichtbetrieb eines elektrischen Verbrauchers, Drehzahl eines Antriebsmotors für einen Fahrantrieb des Bodenbearbeitungsgerätes, Drehzahl eines Antriebsmotors für ein Bodenbearbeitungselement, Drehzahl eines Antriebsmotors eines Gebläses, Betrieb bzw. Nichtbetrieb einer Flüssigkeitsauftragseinrichtung. Somit können elektrische Verbraucher des Bodenbearbeitungsgerätes entweder ganz abgeschaltet werden oder mit abweichenden Geräteparametern betrieben werden. Beispielsweise kann ein Elektromotor so variiert werden, dass dessen Drehzahl reduziert wird und dementsprechend auch eine benötigte Energiemenge sinkt. Elektrische Verbraucher des Bodenbearbeitungsgerätes können beispielsweise Antriebsmotoren für Räder des Bodenbearbeitungsgerätes, für angetriebene Bodenbearbeitungselemente, für ein Sauggebläse oder auch eine Pumpe einer Flüssigkeitsauftragseinrichtung sein. Insbesondere ist es möglich, dass die Antriebsmotoren in unterschiedlichen Modi betrieben werden können, beispielsweise einem Eco-Modus, einem Boost-Modus mit erhöhter Reinigungsleistung und weitere.

Jedem Arbeitsmodus können unterschiedliche Betriebsparameter zugeordnet sein, welche beispielsweise eine Saugleistung, Bürstenleistung und/oder Fahrtgeschwindigkeit des Bodenbearbeitungsgerätes beeinflussen. Die Beeinflussung erfolgt jedoch nur in einem solchen Maß, dass die Bodenbearbeitungstätigkeit dennoch erfolgreich abgeschlossen werden kann. Insbesondere kann es vorgesehen sein, dass mehrere Betriebsparameter angepasst werden, so dass nicht nur ein elektrischer Verbraucher die benötigte Differenzenergiemenge einspart, sondern mehrere elektrische Verbraucher gemeinsam.

Es wird vorgeschlagen, dass die Steuereinrichtung eingerichtet ist, einen Betriebsparameter für einen definierten räumlichen Teilbereich einer Umgebung zu variieren. Der definierte räumliche Teilbereich kann beispielsweise ein Raum einer mehrere Räume umfassenden Wohnung sein, welcher mit abweichenden Betriebsparametern behandelt wird als einer oder mehrere andere räumliche Teilbereiche der Wohnung. Besonders vorteilhaft ist diese Ausgestaltung bei einem sich selbsttätig fortbewegenden Bodenbearbeitungsgerät, welches eine Navigations- und Selbstlokalisierungseinrichtung zur selbsttätigen Fortbewegung innerhalb der Umgebung aufweist. Bei dieser Ausgestaltung kann eine Kartierung von räumlichen Teilbereichen durch beispielsweise ein Laserdistanzsystem oder eine Bilderfassungseinrichtung erfolgen, oder auch durch eine Nutzereingabe an dem Bodenbearbeitungsgerät selbst oder über ein externes Endgerät, welches beispielsweise ein mobiles Gerät wie ein Smartphone oder Tablet-Computer ist, das in Kommunikationsverbindung mit dem Bodenbearbeitungsgerät steht. Anhand der innerhalb der Umgebung aufgenommenen Messdaten kann eine Umgebungskarte für das Bodenbearbeitungsgerät erstellt werden, auf welche die Navigations- und Selbstlokalisierungseinrichtung zurückgreift. Auf diese Umgebungskarte kann vorzugsweise auch die Steuereinrichtung zugreifen, um einen räumlich begrenzten Teilbereich auszuwählen, in welchem ein oder mehrere Betriebsparameter variiert werden können, um einen Gesamtenergiebedarf des Bodenbearbeitungsgerätes zu reduzieren. Insbesondere kann die Steuereinrichtung einen solchen räumlichen Teilbereich auswählen, welcher eine üblicherweise geringere Verschmutzung aufweist als andere räumliche Teilbereiche. Des Weiteren kann der räumliche Teilbereich auch nach der Art und/oder Anzahl dort befindlicher Hindernisse und/oder in Abhängigkeit von der Beschaffenheit eines Bodenbelages ausgewählt werden, welche einen größeren Energieeinsatz für beispielsweise die Fortbewegung des Bodenbearbeitungsgerätes erfordern.

Insbesondere wird vorgeschlagen, dass die Steuereinrichtung eingerichtet ist, einen Betriebsparameter bei zeitlich nacheinander auszuführenden Betriebstätigkeiten bezogen auf mehrere definierte räumliche Teilbereiche räumlich alternierend anzupassen, so dass ein Betriebsparameter während einer ersten Betriebstätigkeit in einem ersten Teilbereich angepasst wird und der Betriebsparameter während einer zweiten Betriebstätigkeit in einem von dem ersten Teilbereich verschiedenen zweiten Teilbereich angepasst wird. Durch eine zeitlich wechselnde Anpassung der Betriebsparameter in mehreren Teilbereichen kann eine gleichmäßige Bodenbearbeitungsleistung erreicht werden, so dass ein Betriebsparameter nicht nur immer in demselben Teilbereich angepasst wird, sondern vielmehr über eine bestimmte Betriebsdauer des Bodenbearbeitungsgerätes betrachtet gleichmäßig verteilt in allen Teilbereichen. Beispielsweise kann zur Einsparung einer Energiemenge zu einem ersten Zeitpunkt ein Eco-Modus in einem von mehreren Teilbereichen angewendet werden, während die übrigen Teilbereiche mit einem Standardmodus behandelt werden. Während einer zeitlich späteren Bodenbearbeitungstätigkeit kann dann ein Eco-Modus in einem anderen räumlichen Teilbereich eingestellt werden. Diese Auswahl kann beispielsweise mit jeder neuen Betriebstätigkeit verändert werden.

Des Weiteren wird vorgeschlagen, dass das Bodenbearbeitungsgerät eine Detektionseinrichtung aufweist, welche eingerichtet ist, einen den Energiebedarf beeinflussenden Umgebungsparameter zu detektieren und an die Steuereinrichtung zu übermitteln. Der den Energiebedarf beeinflussende Umgebungsparameter kann beispielsweise eine Eigenschaft einer zu bearbeitenden Fläche sein. Die Detektionseinrichtung kann besonders vorzugsweise einen Bodensensor aufweisen, welcher eine Bodenart, Bodenstruktur, Verschmutzungsart, einen Verschmutzungsgrad oder andere Parameter der zu bearbeitenden Fläche ermitteln kann. Die Parameter können gegebenenfalls durch einen Nutzer angepasst und/ oder ergänzt werden. Anhand der von der Detektionseinrichtung aufgenommenen Parameter kann dann der Energiebedarf des Bodenbearbeitungsgerätes ermittelt werden. Bei hohen Verschmutzungsgraden ist beispielsweise eine intensivere Reinigungstätigkeit notwendig als bei nahezu sauberen Bodenflächen. Nach der Detektion der Umgebungsparameter überprüft die Steuereinrichtung vorzugsweise zunächst, ob die Bodenbearbeitung, hier insbesondere eine Reinigung, mit den gewählten Betriebsparametern und mit der zur Verfügung stehenden Energiemenge möglich ist. Diese Überprüfung kann derart erfolgen, dass das Bodenbearbeitungsgerät zunächst eine Bearbeitung mit den üblichen Betriebsparametern durchführt und dabei einen Energiebedarf für einzelne räumliche Teilbereiche bestimmt. Daraus wird dann ein Gesamtenergieverbrauch bestimmt und mit der zur Verfügung stehenden Energiemenge verglichen. Falls die Steuereinrichtung feststellt, dass der benötigte Gesamtenergiebedarf größer ist als die vorhandene zur Verfügung stehende Energiemenge, kann die Steuereinrichtung die Betriebsparameter für bestimmte räumliche Teilbereiche anpassen, so dass eine Betriebstätigkeit in allen räumlichen Teilbereichen der Umgebung mit der in dem Akkumulator gespeicherten Energiemenge möglich ist, ohne eine Nachladung durchführen zu müssen. Wie zuvor erläutert kann dies beispielsweise durch eine Änderung der Fahrgeschwindigkeit des Bodenbearbeitungsgerätes erreicht werden, oder auch durch eine Schnellreinigung der räumlichen Teilbereiche und dergleichen.

Des Weiteren wird vorgeschlagen, dass der Steuereinrichtung ein Datenspeicher zugeordnet ist, welcher Referenzdaten für einen voraussichtlichen Energiebedarf zur Durchführung einer vordefinierten Betriebstätigkeit enthält. Beispielsweise können in dem Datenspeicher Daten aus zeitlich vorausgehenden Bodenbearbeitungstätigkeiten gespeichert sein, so dass die Steuereinrichtung einen zu erwartenden Energieverbrauch in beispielsweise definierten räumlichen Teilbereichen bestimmen kann und daraus einen Gesamtenergieverbrauch für eine Mehrzahl von Teilbereichen einer Umgebung errechnen kann. Ferner können typische Energieverbräuche für bestimmte Geräteparameter, Betriebsparameter, Bodentypen und/ oder zu bearbeitende Flächen hinterlegt sein, aus welchen die Steuereinrichtung dann unter Kenntnis der aktuell zu bearbeitenden Fläche einen voraussichtlichen Energiebedarf bestimmen kann. Die Steuereinrichtung des Bodenbearbeitungsgerätes kann Steuerbefehle auch von einer zentralen Steuereinrichtung erhalten, die außerhalb des Bodenbearbeitungsgerätes angeordnet ist und über eine drahtlose Verbindung in Kommunikation mit der Steuereinrichtung des Bodenbearbeitungsgerätes steht. Beispielsweise ist hierzu eine drahtlose Kommunikationsverbindung wie WLAN, Bluetooth oder ZigBee vorteilhaft. Die zentrale Steuereinrichtung kann eine lokale Einrichtung eines externen Gerätes oder auch eine Einrichtung eines Cloud-Serversystems sein. Ebenso kann der der Steuereinrichtung zugeordnete Datenspeicher ein eigener Datenspeicher des Bodenbearbeitungsgerätes oder auch ein externer Datenspeicher sein.

Neben dem zuvor beschriebenen Bodenbearbeitungsgerät wird mit der Erfindung des Weiteren ein Verfahren zum Betrieb eines Bodenbearbeitungsgerätes vorgeschlagen, welches mindestens einen elektrischen Verbraucher, einen Akkumulator zur Energieversorgung des elektrischen Verbrauchers und eine Steuereinrichtung zur Steuerung des Bodenbearbeitungsgerätes aufweist, wobei die Steuereinrichtung einen voraussichtlichen Energiebedarf eines oder mehrerer Verbraucher zur Durchführung und vollständigen Beendigung einer vordefinierten Betriebstätigkeit ermittelt, den Energiebedarf mit einer in dem Akkumulator gespeicherten Energiemenge vergleicht und in dem Fall, dass die gespeicherte Energiemenge geringer ist als der Energiebedarf, den Energiebedarf durch eine Anpassung eines oder mehrerer Betriebsparameter der Betriebstätigkeit reduziert, um die Betriebstätigkeit erfolgreich auszuführen.

Das Verfahren dient insbesondere zum Betrieb eines zuvor beschriebenen Bodenbearbeitungsgerätes, so dass die in Bezug auf das Bodenbearbeitungsgerät erläuterten Merkmale und Vorteile gleichzeitig auch für das erfindungsgemäße Verfahren gelten.

Insbesondere kann in Bezug auf das Verfahren vorgesehen sein, dass ein Betriebsparameter eines elektrischen Verbrauchers und/oder ein für eine Bodenbearbeitungstätigkeit verwendetes Bearbeitungsmittel und/oder ein Bearbeitungsmodus des Bodenbearbeitungsgerätes variiert wird.

Des Weiteren wird insbesondere vorgeschlagen, dass die Steuereinrichtung einen Betriebsparameter für einen definierten räumlichen Teilbereich einer Umgebung variiert.

Besonders bevorzugt wird vorgeschlagen, dass die Steuereinrichtung einen Betriebsparameter bei zeitlich nacheinander auszuführenden Betriebstätigkeiten bezogen auf mehrere definierte Teilbereiche räumlich alternierend anpasst, so dass ein Betriebsparameter während einer ersten Betriebstätigkeit in einem ersten Teilbereich angepasst wird und der Betriebsparameter während einer zweiten Betriebstätigkeit in einem von dem ersten Teilbereich verschiedenen zweiten Teilbereich angepasst wird.

Des Weiteren ist es möglich, dass die Steuereinrichtung den tatsächlichen Energiebedarf des Bodenbearbeitungsgerätes ab Beginn der Reinigungstätigkeit überwacht und durch einen permanenten Abgleich mit dem Ergebnis der zu Beginn der Reinigungstätigkeit vorgenommenen Berechnung des zu erwartenden Energiebedarfs ermittelt, ob die Prognose eher zutreffend war oder ob es unerwartete Abweichungen gibt, die eine weitere Anpassung der Betriebsparameter erfordern.

Bei allen Energiebedarfsberechnungen kann von der Steuereinrichtung regelmäßig berücksichtigt werden, dass in jedem Fall eine Restenergiemenge in dem Akkumulator zurückzuhalten ist, die eine sichere Rückkehr des Bodenbearbeitungsgerätes zu einer Lade- bzw. Basisstation ermöglicht.

Der Energieverbrauch während der Betriebstätigkeit des Bodenbearbeitungsgerätes kann in Form einer Energiehüllkurve im Datenspeicher der Steuereinrichtung abgelegt sein. Diese Energiehüllkurve umfasst eine nach Zeitund/oder Wegstrecke abgelegte Folge von Energieverbrauchswerten, die über einen zusätzlichen Berechnungsschritt geglättet sind. Anhand von Vergleichsbetrachtungen derartiger Energiehüllkurven, die für alle räumlichen Teilbereiche abgelegt sind, kann die Steuereinrichtung des Bodenbearbeitungsgerätes vor Beginn einer Betriebstätigkeit einen räumlichen Teilbereich ermitteln, der möglichst optimal mit der zur Verfügung stehenden Energiemenge gereinigt werden kann und auf diesem Wege eine Anpassung daran durch eine Auswahl geeigneter räumlicher Teilbereiche vornehmen.

Des Weiteren kann eine Energiekarte von dem Bodenbearbeitungsgerät erstellt werden, die eine zusätzliche Karte zu der von dem Reinigungsgerät erstellten Umgebungskarte ist. Die Energiekarte stellt den tatsächlichen Energieverbrauch des Bodenbearbeitungsgerätes an jeder befahrenen Position in der Umgebung dar. Die Energiekarte kann einem Nutzer auf einem externen Endgerät, wie beispielsweise einem Mobiltelefon, Laptop oder ähnlichem angezeigt werden. Dabei können die Energiewerte durch einen korrespondierenden Farbwert dargestellt werden, so dass ähnlich einer thermografischen Darstellung leicht erkannt werden kann, an welcher Stelle eines Raumes ein besonders hoher oder niedriger Energieverbrauch stattgefunden hat. Auf diesem Wege kann der Nutzer zum Beispiel räumliche Teilbereiche definieren, die für eine zukünftige Reinigungsfahrt unter energiesparenden Gesichtspunkten ausgenommen werden darf. Auch denkbar ist eine von dem Nutzer vorgenommene Identifizierung und gegebenenfalls Beseitigung möglicher Gründe für einen hohen Energiebedarf. So kann ein Abrücken von Stühlen an einem Tisch oder das Versetzen einer Vase in der Umgebung die Verfahrstrategie des Bodenbearbeitungsgerätes so positiv beeinflussen, dass eine vereinfachte und energiesparende Betriebstätigkeit mit geringeren Rangiermanövern möglich ist.

### Kurze Beschreibung der Zeichnungen

Im Folgenden wird die Erfindung anhand von Ausführungsbeispielen näher erläutert. Es zeigen:
- Fig. 1: ein Bodenbearbeitungsgerät mit einer ersten Einstellung von Betriebsparametern,
- Fig. 2: das Bodenbearbeitungsgerät mit einer zweiten Einstellung von Betriebsparametern.

### Beschreibung der Ausführungsformen

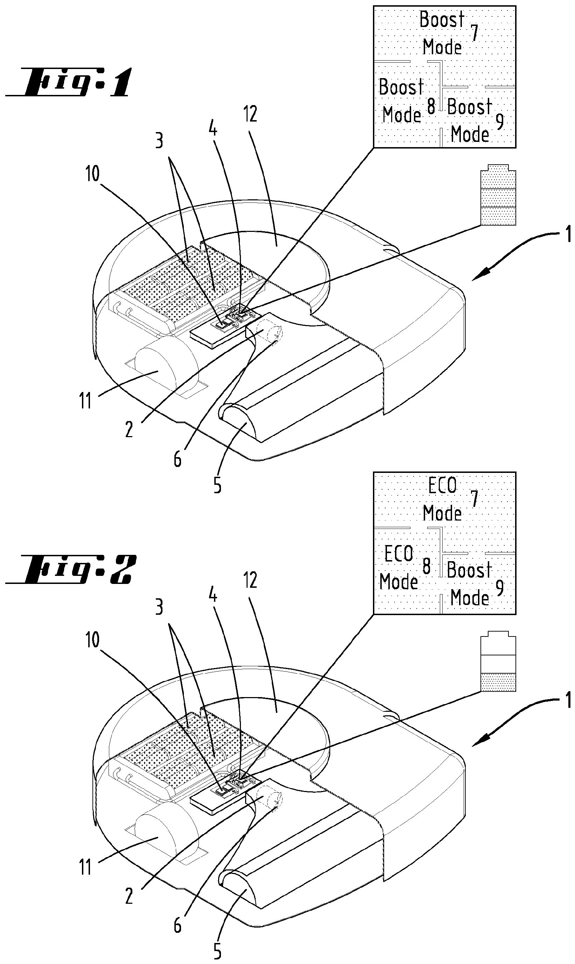

Figur 1 zeigt in einer teilweise aufgebrochenen perspektivischen Darstellung ein Bodenbearbeitungsgerät 1, welches als sich selbsttätig fortbewegender Reinigungsroboter ausgebildet ist. Das Bodenbearbeitungsgerät 1 weist motorisch angetriebene Räder 11 zur Fortbewegung des Bodenbearbeitungsgerätes 1 innerhalb einer Umgebung auf. Des Weiteren verfügt das Bodenbearbeitungsgerät 1 über eine Navigationseinrichtung mit einer Abstandsmesseinrichtung 12, welche hier beispielsweise als optische Triangulationsmesseinrichtung ausgebildet ist. Die Abstandsmesseinrichtung 12 misst Abstände zu in der Umgebung vorhandenen Hindernissen, wie beispielsweise Möbeln, Wänden und/oder Personen. Eine Steuereinrichtung 4 des Bodenbearbeitungsgerätes 1 erstellt aus den Abstandsmessdaten eine Umgebungskarte der Umgebung, anhand welcher sich das Bodenbearbeitungsgerät 1 während einer Fortbewegung orientieren kann. Der Steuereinrichtung 4 ist des Weiteren ein Datenspeicher 10 zugeordnet, in welchem einerseits eine erstellte Umgebungskarte gespeichert sein kann, und andererseits Reinigungsprofile mit bei einer Betriebstätigkeit des Bodenbearbeitungsgerätes 1, d. h. einer Reinigung einer Fläche, anzuwendenden Betriebsparametern.

Das Bodenbearbeitungsgerät 1 weist ein Bodenbearbeitungselement 5 auf, welches hier eine von einem Elektromotor (nicht dargestellt) angetriebene Reinigungswalze ist, die über eine zu bearbeitende Fläche streicht. Der Elektromotor ist ein elektrischer Verbraucher 2 im Sinne der Darstellung. Des Weiteren verfügt das Bodenbearbeitungsgerät 1 über ein ebenfalls von einem Elektromotor angetriebenes Gebläse 6, welches Hauptbestandteil einer Saugeinrichtung ist, mittels welcher das Bodenbearbeitungsgerät 1 Staub und Schmutz von einer zu reinigenden Fläche in eine Saugkammer einsaugen kann. Der Elektromotor des Gebläses 6 ist ebenfalls ein elektrischer Verbraucher 2 des Bodenbearbeitungsgerätes 1. Zur Energieversorgung der Verbraucher 2 verfügt das Bodenbearbeitungsgerät 1 über Akkumulatoren 3, welche beispielsweise an einer Basisstation für das Bodenbearbeitungsgerät 1 aufgeladen werden können.

Des Weiteren weist das Bodenbearbeitungsgerät 1 unterseitig, d. h. an einer in Richtung der zu bearbeitenden Fläche zeigenden Gehäuseseite, eine Detektionseinrichtung (nicht dargestellt) auf, welche eingerichtet ist, Umgebungsparameter wie Eigenschaften der zu bearbeitenden Fläche zu detektieren. Hierzu zählen beispielsweise eine Bodenart und ein Verschmutzungsgrad der zu bearbeitenden Fläche. Die Detektionseinrichtung weist hier beispielsweise eine Bilderfassungseinrichtung auf, welche Bilder der Bodenfläche aufnimmt.

Die Steuereinrichtung 4 vergleicht die von der Detektionseinrichtung aufgenommenen Bilder mit Referenzbildern, um auf eine Bodenart und einen Verschmutzungsgrad der Fläche rückschließen zu können. Der Datenspeicher 10 kann bezogen auf bestimmte Bodenarten, Verschmutzungsgrade und bestimmte räumliche Teilbereiche 7, 8, 9 einer zu reinigenden Fläche, beispielsweise Räume einer Wohnung, tabellenartig Betriebsparameter beinhalten, welche üblicherweise zur Bearbeitung einer solchen Fläche mit solchen Verschmutzungsgraden geeignet sind. Des Weiteren ist diesen Betriebsparametern zugeordnet eine Angabe über einen voraussichtlichen Energiebedarf der zum Betrieb des Bodenbearbeitungsgerätes 1 benötigten Verbraucher 2, d. h. des die Räder 11 antreibenden Antriebsmotors, des das Gebläse 6 antreibenden Antriebsmotors und des das Bodenbearbeitungselement 5 antreibenden Antriebsmotors.

Die Erfindung gemäß den Figuren 1 und 2 erfolgt beispielsweise so, dass zunächst Reinigungsprofile für bestimmte Betriebstätigkeiten des Bodenbearbeitungsgerätes 1 festgelegt werden, die einen oder mehrere Betriebsparameter beinhalten. Die Reinigungsprofile umfassen hier beispielsweise verschiedene Reinigungsmodi, nämlich einen relativ energiesparsamen Eco-Modus und einen Boost-Modus mit demgegenüber erhöhtem Energiebedarf der Verbraucher 2. Die verschiedenen Reinigungsmodi sind durch unterschiedliche Betriebsparameter gekennzeichnet, wie beispielsweise eine bestimmte Saugleistung des Gebläses 6, eine bestimmte Reinigungsleistung des Bodenbearbeitungselementes 5 oder eine bestimmte Fahrtgeschwindigkeit des Bodenbearbeitungsgerätes 1 mittels der angetriebenen Räder 11. Des Weiteren kann ein Reinigungsmodus bzw. ein Reinigungsprofil auch eine bestimmte Reinigungsart festlegen, beispielsweise eine Trockenreinigung der zu reinigenden Fläche mittels des Gebläses 6 und des Bodenbearbeitungselementes 5 oder eine Nassreinigung, bei welcher eine Reinigungsflüssigkeit auf das Bodenbearbeitungselement 5 und/oder die zu reinigende Fläche aufgetragen wird.

Des Weiteren werden räumliche Teilbereiche 7, 8, 9 der zu reinigenden Räumlichkeiten mittels der Abstandsmesseinrichtung 12 erfasst oder alternativ durch eine Eingabe an dem Bodenbearbeitungsgerät 1 oder einem mit dem Bodenbearbeitungsgerät 1 in Kommunikationsverbindung stehenden externen Endgerät an das Bodenbearbeitungsgerät 1 übergeben. Des Weiteren können Umgebungsparameter, welche den Energiebedarf der Verbraucher 2 beeinflussen, mittels der Detektionseinrichtung detektiert werden. Die Detektionserkennung kann beispielsweise optisch oder alternativ auch akustisch eine Bodenerkennung durchführen. Die Detektionsergebnisse können gegebenenfalls durch einen Nutzer des Bodenbearbeitungsgerätes 1 angepasst oder ergänzt werden.

Nach der Detektion der Umgebungsparameter und der Definition von Reinigungsprofilen mit bestimmten Reinigungsmodi überprüft die Steuereinrichtung 4 des Bodenbearbeitungsgerätes 1, ob eine von dem Nutzer ausgewählte Betriebstätigkeit, d. h. beispielsweise ein bestimmter Reinigungsmodus, mit dem aktuellen Ladezustand des Akkumulators 3 erfolgen kann, d. h. ob die in dem Akkumulator 3 gespeicherte Energiemenge ausreicht, um die Betriebstätigkeit unter Verwendung definierter Betriebsparameter auszuführen. Diese Überprüfung kann derart erfolgen, dass das Bodenbearbeitungsgerät 1 zunächst eine Bearbeitung mit den voreingestellten Standard-Betriebsparamatern durchführt und dabei einen Energiebedarf der Verbraucher 2 innerhalb der einzelnen räumlichen Teilbereiche 7, 8, 9 bestimmt. Aus den benötigten Energiemengen wird ein Gesamtenergieverbrauch für alle Verbraucher 2 des Bodenbearbeitungsgerätes 1 errechnet und mit der in dem Akkumulator 3 gespeicherten Energiemenge verglichen. Falls die Steuereinrichtung 4 feststellt, dass der Gesamtenergieverbrauch höher ist als die gespeicherte Energiemenge des Ackumulators 3 passt die Steuereinrichtung 4 die Betriebsparameter für beispielsweise zwei räumliche Teilbereiche 7, 8 aller zu reinigenden Teilbereiche 7, 8, 9 an. Dadurch ist eine Reinigung aller räumlichen Teilbereiche 7, 8, 9 mit der aktuell gespeicherten Energiemenge möglich. Der geänderte Betriebsparameter ist hier beispielsweise die Änderung (Erhöhung) einer durchschnittlichen Fahrtgeschwindigkeit des Bodenbearbeitungsgerätes 1 während des Reinigungsbetriebs, so dass sich insgesamt eine kürzere Gesamtzeit für einen Reinigungsbetrieb ergibt. Dadurch erfolgt eine Schnellreinigung der räumlichen Teilbereiche 7, 8, die eine insgesamt geringere Energiemenge erfordert. In diesem Sinne kann eine Grobreinigung vorgesehen sein, bei welcher die Fahrstrategie des Bodenbearbeitungsgerätes 1 so angepasst wird, dass gegebenenfalls nur die Hauptflächen eines zu reinigenden Bereiches gereinigt werden, während schwer zugängliche Flächen, zum Beispiel unterhalb einer Esstischgruppe mit Stühlen, welche eine Vielzahl von Rangierschritten erfordert, nicht gereinigt werden. Auch eine Reinigung von Raumecken mit einer Vielzahl von Vor- und Zurückbewegungen kann zugunsten einer gleichmäßig ausführbaren Kurvenfahrt weniger gründlich ausgeführt werden, wobei ein nicht überfahrener und ungereinigt bleibender Eckbereich entsteht, der von einem Nutzer im Sinne einer Grobreinigung tolerierbar ist.

Des Weiteren ist es denkbar, dass ein Reinigungsprofil bezogen auf die räumlichen Teilbereiche 7, 8, 9 alterniert, damit die Reinigungsqualität innerhalb aller räumlichen Teilbereiche 7, 8, 9 (bezogen auf eine längere Betriebsdauer des Bodenbearbeitungsgerätes 1) homogen bleibt. Alternativ zu einer automatischen Anpassung der Betriebsparameter ist es auch möglich, dass ein Nutzer von dem Bodenbearbeitungsgerät 1 oder einem damit in Kommunikationsverbindung stehenden externen Gerät über eine Notwendigkeit einer Anpassung der Betriebsparameter informiert wird und der Nutzer dann einem Vorschlag für Betriebsparameter zustimmen oder diesen ablehnen kann. Während der Betriebstätigkeit könnte ein Energiebedarf auch kurzfristig erhöht werden, falls ein Staubmengensensor ein lokales, temporäres erhöhtes Schmutzaufkommen detektiert.

Zusätzlich kann eine Detektionseinrichtung des Bodenbearbeitungsgerätes 1 feststellen, in welchem Zustand der Akkumulator 3 ist, d. h. welche aktuelle Ladekapazität dieser aufweist und wie ein Alterungszustand ist. Daraus kann die zur Verfügung stehende aktuell gespeicherte Energiemenge ermittelt werden. Diese Informationen können kontinuierlich oder in zufälligen oder festgelegten Zeitabständen erfasst werden.

Es ist möglich, dass das Bodenbearbeitungsgerät 1 typische Energieverbräuche der Verbraucher 2 aus früheren Betriebstätigkeiten bestimmt. Ferner können typische Energieverbräuche für bestimmte Betriebsparameter, Bodenarten, Verschmutzungsgrade und dergleichen hinterlegt sein, aus welchen die Steuereinrichtung 4 dann beispielsweise in Abhängigkeit von einer bekannten Bodenart und in Abhängigkeit gewählter Betriebsparameter einen Energiebedarf bestimmen kann. Die Steuereinrichtung 4 kann grundsätzlich eine lokale Steuereinrichtung 4 des Bodenbearbeitungsgerätes 1 sein oder auch eine externe Zentraleinheit, die außerhalb des Bodenbearbeitungsgerätes 1 angeordnet ist und die über einen drahtlosen oder drahtgebundenen Kommunikationskanal mit dem Bodenbearbeitungsgerät 1 in Kommunikationsverbindung steht. Die Zentraleinheit kann beispielsweise Teil eines Cloud-Serversystems sein.

Gemäß einer besonderen Ausführungsform ist es möglich, dass drei räumliche Teilbereiche 7, 8, 9 nach einem von einem Nutzer gewählten Reinigungsprofil gereinigt werden sollen. Alle räumlichen Teilbereiche 7, 8, 9 sollen wie in Figur 1 dargestellt in einem Boost-Modus gereinigt werden, welcher eine bestimmte Saugleistung des Gebläses 6 und eine bestimmte Bürstenleistung des Bodenbearbeitungselementes 5 erfordert. Nach der Bestimmung des Gesamtenergiebedarfs für alle an der Betriebstätigkeit beteiligten Verbraucher 2 stellt die Steuereinrichtung 4 fest, dass die in dem Akkumulator 3 gespeicherte Energiemenge nicht ausreicht, um das gewünschte Reinigungsprofil in allen Teilbereichen 7, 8, 9 vollständig auszuführen. Die Steuereinrichtung 4 verändert das Reinigungsprofil daraufhin - wie in Figur 2 dargestellt - so, dass zwei der räumlichen Teilbereiche 7, 8, 9, nämlich die räumlichen Teilbereiche 7 und 8, in einem Eco-Modus gereinigt werden, welcher einen geringeren Energiebedarf aufweist. Der weitere räumliche Teilbereich 9 wird nach wie vor in einem Boost-Modus behandelt. Um eine annähernd gleiche Reinigungsqualität in allen Teilbereichen 7, 8, 9 zu erreichen, kann der Boost-Modus zeitlich alternierend auch in den übrigen räumlichen Teilbereichen 7, 8 verwendet werden, so dass sich der räumliche Teilbereich 7, 8, 9, welcher mit dem Boost-Modus behandelt wird, von Betriebstätigkeit zu Betriebstätigkeit ändert. Bei einem nächsten Reinigungsbetrieb wird dann entweder der räumliche Teilbereich 7 oder der räumliche Teilbereich 8 mit einem Boost-Modus behandelt wird, während die anderen räumlichen Teilbereiche 8, 9 bzw. 7, 9 dann mit dem Eco-Modus behandelt werden.

### Liste der Bezugszeichen

- 1: Bodenbearbeitungsgerät
- 2: Verbraucher
- 3: Akkumulator
- 4: Steuereinrichtung
- 5: Bodenbearbeitungselement
- 6: Gebläse
- 7: Räumlicher Teilbereich
- 8: Räumlicher Teilbereich
- 9: Räumlicher Teilbereich
- 10: Datenspeicher
- 11: Rad
- 12: Abstandsmesseinrichtung

## Patentansprüche

1. Bodenbearbeitungsgerät (1) mit mindestens einem elektrischen Verbraucher (2), einem Akkumulator (3) zur Energieversorgung des elektrischen Verbrauchers (2) und einer Steuereinrichtung (4) zur Steuerung des Bodenbearbeitungsgerätes (1), **dadurch gekennzeichnet, dass** die Steuereinrichtung (4) eingerichtet ist, einen voraussichtlichen Energiebedarf eines oder mehrerer Verbraucher (2) zur Durchführung und vollständigen Beendigung einer vordefinierten Betriebstätigkeit zu ermitteln, den voraussichtlichen Energiebedarf mit einer in dem Akkumulator (3) gespeicherten Energiemenge zu vergleichen und in dem Fall, dass die gespeicherte Energiemenge geringer ist als der Energiebedarf, den Energiebedarf durch eine Anpassung eines oder mehrerer Betriebsparameter der Betriebstätigkeit zu reduzieren, um die Betriebstätigkeit erfolgreich auszuführen.

2. Bodenbearbeitungsgerät (1) nach Anspruch 1, **dadurch gekennzeichnet, dass** die Anpassung des Betriebsparameters eine Anpassung eines Betriebsparameters eines elektrischen Verbrauchers (2) und/ oder eines für eine Bodenbearbeitungstätigkeit verwendeten Bearbeitungsmittels und/ oder eine Anpassung eines Bearbeitungsmodus des Bodenbearbeitungsgerätes (1) beinhaltet.

3. Bodenbearbeitungsgerät (1) nach Anspruch 1 oder 2, **dadurch gekennzeichnet, dass** der Betriebsparameter ausgewählt ist aus der Gruppe: Betrieb bzw. Nichtbetrieb eines elektrischen Verbrauchers (2), Drehzahl eines Antriebsmotors für einen Fahrantrieb des Bodenbearbeitungsgerätes (1), Drehzahl eines Antriebsmotors für ein Bodenbearbeitungselement (5), Drehzahl eines Antriebsmotors eines Gebläses (6), Betrieb bzw. Nichtbetrieb einer Flüssigkeitsauftragseinrichtung.

4. Bodenbearbeitungsgerät (1) nach einem der vorhergehenden Ansprüche, **dadurch gekennzeichnet, dass** die Steuereinrichtung (4) eingerichtet ist, einen Betriebsparameter für einen definierten räumlichen Teilbereich (7, 8, 9) einer Umgebung zu variieren.

5. Bodenbearbeitungsgerät (1) nach Anspruch 4, **dadurch gekennzeichnet, dass** die Steuereinrichtung (4) eingerichtet ist, einen Betriebsparameter bei zeitlich nacheinander auszuführenden Betriebstätigkeiten bezogen auf mehrere definierte räumliche Teilbereiche (7, 8, 9) räumlich alternierend anzupassen, so dass ein Betriebsparameter während einer ersten Betriebstätigkeit in einem ersten Teilbereich (7, 8, 9) angepasst wird und der Betriebsparameter während einer zweiten Betriebstätigkeit in einem von dem ersten Teilbereich (7, 8, 9) verschiedenen zweiten Teilbereich (7, 8, 9) angepasst wird.

6. Bodenbearbeitungsgerät (1) nach einem der vorhergehenden Ansprüche, **gekennzeichnet durch** eine Detektionseinrichtung, welche eingerichtet ist, einen den Energiebedarf beeinflussenden Umgebungsparameter, insbesondere eine Eigenschaft einer zu bearbeitenden Fläche, zu detektieren und an die Steuereinrichtung (4) zu übermitteln.

7. Bodenbearbeitungsgerät (1) nach einem der vorhergehenden Ansprüche, **dadurch gekennzeichnet, dass** der Steuereinrichtung (4) ein Datenspeicher (10) zugeordnet ist, welcher Referenzdaten für einen voraussichtlichen Energiebedarf zur Durchführung einer vordefinierten Betriebstätigkeit enthält.

8. Verfahren zum Betrieb eines Bodenbearbeitungsgerätes (1) mit mindestens einem elektrischen Verbraucher (2), einem Akkumulator (3) zur Energieversorgung des elektrischen Verbrauchers (2) und einer Steuereinrichtung (4) zur Steuerung des Bodenbearbeitungsgerätes (1), **dadurch gekennzeichnet, dass** die Steuereinrichtung (4) einen voraussichtlichen Energiebedarf eines oder mehrerer Verbraucher (2) zur Durchführung und vollständigen Beendigung einer vordefinierten Betriebstätigkeit ermittelt, den Energiebedarf mit einer in dem Akkumulator (3) gespeicherten Energiemenge vergleicht und in dem Fall, dass die gespeicherte Energiemenge geringer ist als der Energiebedarf, den Energiebedarf durch eine Anpassung eines oder mehrerer Betriebsparameter der Betriebstätigkeit reduziert, um die Betriebstätigkeit erfolgreich auszuführen.

9. Verfahren nach Anspruch 8, **dadurch gekennzeichnet, dass** ein Betriebsparameter eines elektrischen Verbrauchers (2) und/ oder ein für eine Bodenbearbeitungstätigkeit verwendetes Bearbeitungsmittel und/ oder ein Bearbeitungsmodus des Bodenbearbeitungsgerätes (1) variiert wird.

10. Verfahren nach Anspruch 8 oder 9, **dadurch gekennzeichnet, dass** die Steuereinrichtung (4) einen Betriebsparameter für einen definierten räumlichen Teilbereich (7, 8, 9) einer Umgebung variiert, insbesondere einen Betriebsparameter bei zeitlich nacheinander auszuführenden Betriebstätigkeiten bezogen auf mehrere definierte Teilbereiche (7, 8, 9) räumlich alternierend anpasst, so dass ein Betriebsparameter während einer ersten Betriebstätigkeit in einem ersten Teilbereich (7, 8, 9) angepasst wird und der Betriebsparameter während einer zweiten Betriebstätigkeit in einem von dem ersten Teilbereich (7, 8, 9)verschiedenen zweiten Teilbereich (7, 8, 9) angepasst wird.

## Claims

1. Floor treatment apparatus (1) comprising at least one electrical consumer (2), an accumulator (3) for supplying energy to the electrical consumer (2), and a control device (4) for controlling the floor treatment apparatus (1), **characterised in that** the control device (4) is designed to determine an expected energy requirement of one or more consumers (2) for carrying out and fully completing a predefined operating activity, to compare the expected energy requirement with an amount of energy stored in the accumulator (3), and, in the case that the stored amount of energy is less than the energy requirement, to reduce the energy requirement by adjusting one or more operating parameters of the operating activity in order to successfully carry out the operating activity.

2. Floor treatment apparatus (1) according to claim 1, **characterised in that** the adjustment of the operating parameter includes an adjustment of an operating parameter of an electrical consumer (2) and/or of a treatment means used for a floor treatment activity and/or an adjustment of a treatment mode of the floor treatment apparatus (1).

3. Floor treatment apparatus (1) according to either claim 1 or claim 2, **characterised in that** the operating parameter is selected from the following group: operation or non-operation of an electrical consumer (2), speed of a drive motor for a travel drive of the floor treatment apparatus (1), speed of a drive motor for a floor treatment element (5), speed of a drive motor of a fan (6), operation or non-operation of a liquid application device.

4. Floor treatment apparatus (1) according to any of the preceding claims, **characterised in that** the control device (4) is designed to vary an operating parameter for a defined spatial portion (7, 8, 9) of an environment.

5. Floor treatment apparatus (1) according to claim 4, **characterised in that** the control device (4) is designed to adjust an operating parameter in a spatially alternating manner with respect to a plurality of defined spatial portions (7, 8, 9) in the case of operating activities which are to be carried out in succession, such that an operating parameter is adjusted during a first operating activity in a first portion (7, 8, 9), and the operating parameter is adjusted during a second operating activity in a second portion (7, 8, 9) which is different to the first portion (7, 8, 9).

6. Floor treatment apparatus (1) according to any of the preceding claims, **characterised by** a detection device which is designed to detect an environmental parameter, in particular a property of a surface to be treated, which influences the energy requirement and to transmit said parameter to the control device (4).

7. Floor treatment apparatus (1) according to any of the preceding claims, **characterised in that** the control device (4) is assigned a data memory (10) which contains reference data for an expected energy requirement for carrying out a predefined operating activity.

8. Method for operating a floor treatment apparatus (1) comprising at least one electrical consumer (2), an accumulator (3) for supplying energy to the electrical consumer (2), and a control device (4) for controlling the floor treatment apparatus (1), **characterised in that** the control device (4) determines an expected energy requirement of one or more consumers (2) for carrying out and fully completing a predefined operating activity, compares the energy requirement with an amount of energy stored in the accumulator (3), and, in the case that the stored amount of energy is less than the energy requirement, reduces the energy requirement by adjusting one or more operating parameters of the operating activity in order to successfully carry out the operating activity.

9. Method according to claim 8, **characterised in that** an operating parameter of an electrical consumer (2) and/or a treatment means used for a floor treatment activity and/or a treatment mode of the floor treatment apparatus (1) is varied.

10. Method according to either claim 8 or claim 9, **characterised in that** the control device (4) varies an operating parameter for a defined spatial portion (7, 8, 9) of an environment, in particular adjusts an operating parameter in a spatially alternating manner with respect to a plurality of defined portions (7, 8, 9) in the case of operating activities which are to be carried out in succession, such that an operating parameter is adjusted during a first operating activity in a first portion (7, 8, 9), and the operating parameter is adjusted during a second operating activity in a second portion (7, 8, 9) which is different to the first portion (7, 8, 9).

## Revendications

1. Appareil de traitement du sol (1) avec au moins un consommateur électrique (2), un accumulateur (3) pour l'alimentation en énergie du consommateur électrique (2) et un dispositif de commande (4) pour la commande de l'appareil de traitement du sol (1), **caractérisé en ce que** le dispositif de commande (4) est conçu pour déterminer un besoin en énergie prévisionnel d'un ou plusieurs consommateurs (2) pour l'exécution et l'achèvement complet d'une activité de fonctionnement prédéfinie, de comparer le besoin d'énergie prévisionnel avec une quantité d'énergie stockée dans l'accumulateur (3) et, dans le cas où la quantité d'énergie stockée est inférieure au besoin d'énergie, de réduire le besoin d'énergie en adaptant un ou plusieurs paramètres de fonctionnement de l'activité de fonctionnement pour mener à bien l'activité de fonctionnement.

2. Appareil de traitement du sol (1) selon la revendication 1, **caractérisé en ce que** l'adaptation du paramètre de fonctionnement comprend une adaptation d'un paramètre de fonctionnement d'un consommateur électrique (2) et/ou d'un moyen de traitement utilisé pour une activité de traitement du sol et/ou une adaptation d'un mode de traitement de l'appareil de traitement du sol (1).

3. Appareil de traitement du sol (1) selon la revendication 1 ou 2, **caractérisé en ce que** le paramètre de fonctionnement est choisi dans le groupe : fonctionnement ou non d'un consommateur électrique (2), vitesse de rotation d'un moteur d'entraînement pour un entraînement de déplacement de l'appareil de traitement du sol (1), vitesse de rotation d'un moteur d'entraînement pour un élément de traitement du sol (5), vitesse de rotation d'un moteur d'entraînement d'un souffleur (6), fonctionnement ou non d'un dispositif d'application de liquide.

4. Appareil de traitement du sol (1) selon l'une des revendications précédentes, **caractérisé en ce que** le dispositif de commande (4) est conçu pour faire varier un paramètre de fonctionnement pour une zone spatiale partielle définie (7, 8, 9) d'un environnement.

5. Appareil de traitement du sol (1) selon la revendication 4, **caractérisé en ce que** le dispositif de commande (4) est conçu pour adapter un paramètre de fonctionnement en alternance spatiale lors d'activités de fonctionnement à exécuter successivement dans le temps par rapport à plusieurs zones partielles spatiales définies (7, 8, 9) de manière qu'un paramètre de fonctionnement soit adapté pendant une première activité de fonctionnement dans une première zone partielle (7, 8, 9) et que le paramètre de fonctionnement soit adapté pendant une deuxième activité de fonctionnement dans une deuxième zone partielle (7, 8, 9) différente de la première zone partielle (7, 8, 9).

6. Appareil de traitement du sol (1) selon l'une des revendications précédentes, **caractérisé par** un dispositif de détection qui est conçu pour détecter un paramètre d'environnement influençant le besoin en énergie, en particulier une caractéristique d'une surface à traiter, et pour le transmettre au dispositif de commande (4).

7. Appareil de traitement du sol (1) selon l'une des revendications précédentes, **caractérisé en ce qu'**une mémoire de données (10) est associée au dispositif de commande (4), laquelle contient des données de référence pour un besoin énergétique prévisionnel pour l'exécution d'une activité de fonctionnement prédéfinie.

8. Procédé de fonctionnement d'un appareil de traitement du sol (1) avec au moins un consommateur électrique (2), un accumulateur (3) pour l'alimentation en énergie du consommateur électrique (2) et un dispositif de commande (4) pour la commande de l'appareil de traitement du sol (1), **caractérisé en ce que** le dispositif de commande (4) détermine un besoin en énergie prévisionnel d'un ou de plusieurs consommateurs (2) pour l'exécution et l'achèvement complet d'une activité de fonctionnement prédéfinie, compare le besoin en énergie à une quantité d'énergie stockée dans l'accumulateur (3) et, dans le cas où la quantité d'énergie stockée est inférieure au besoin en énergie, réduit le besoin en énergie par une adaptation d'un ou de plusieurs paramètres de fonctionnement de l'activité de fonctionnement pour mener à bien l'activité de fonctionnement.

9. Procédé selon la revendication 8, **caractérisé en ce qu'**est varié un paramètre de fonctionnement d'un consommateur électrique (2) et/ou un moyen de traitement utilisé pour une activité de traitement du sol et/ou un mode de traitement de l'appareil de traitement du sol (1).

10. Procédé selon la revendication 8 ou 9, **caractérisé en ce que** le dispositif de commande (4) fait varier un paramètre de fonctionnement pour une zone partielle spatiale définie (7, 8, 9) d'un environnement, en particulier un paramètre de fonctionnement pour des activités de fonctionnement à exécuter successivement dans le temps par rapport à plusieurs zones partielles définies (7, 8, 9), de manière qu'un paramètre de fonctionnement soit adapté pendant une première activité de fonctionnement dans une première zone partielle (7, 8, 9) et que le paramètre de fonctionnement soit adapté pendant une deuxième activité de fonctionnement dans une deuxième zone partielle (7, 8, 9) différente de la première zone partielle (7, 8, 9).
